# EUROPEAN PATENT APPLICATION

(11) **EP 4 830 509 A1**
(43) Date of publication of application: **28.10.2026**
(21) Application number: 24906924.6
(22) Date of filing: 25.10.2024
(51) Int. Cl.: A01G 7/00, A01G 17/02

(54) **MANAGEMENT SYSTEM, MANAGEMENT DEVICE, MANAGEMENT METHOD, AND COMPUTER PROGRAM**

(30) Priority: 21.12.2023 JP 2023215789
(71) Applicant: KUBOTA CORPORATION, Osaka-shi, Osaka 530-0011 (JP)
(72) Inventor: OGUMA, Takashi, Sakai-shi, Osaka 590-0908 (JP); SASAMOTO, Hirokazu, Sakai-shi, Osaka 590-0908 (JP); HIRONAKA, Nao, Sakai-shi, Osaka 590-0908 (JP); TANAKA, Satoshi, Sakai-shi, Osaka 590-0908 (JP); NAMBU, Masahito, Sakai-shi, Osaka 590-0908 (JP)
(74) Representative: Cabinet Beau de Loménie
(86) International application number: PCT/JP2024/038110
(87) International publication number: WO 2025/134536

(57) **Abstract**

A management system 1 of the present disclosure is a management system for a plurality of plants T aligned along a row direction. The management system 1 includes a quality measurement device 2 that is provided in an agricultural machine 6 moving along the row direction and acquires measurement information on fruit items of the plurality of plants T, a positioning device 4 that is provided in the agricultural machine 6 and acquires position information on the agricultural machine 6, a shape detection device 5 that detects a shape of a target plant Ta, and a management server 8. The management server 8 includes a processing unit 22 that executes first identification processing of identifying the target plant Ta based on the position information from among the plurality of plants T, and second identification processing of, when the target plant Ta cannot be identified by the first identification processing, identifying the target plant Ta based on a detection result of the shape detection device 5.

## Description

### TECHNICAL FIELD

The present disclosure relates to a management system, a management device, a management method, and a computer program.

The present application claims priority based on Japanese Patent Application No. 2023-215789 filed on December 21, 2023, the entire contents of which are incorporated herein by reference.

### BACKGROUND ART

Patent Literature 1 discloses a measurement device that emits light to an object to be measured, such as a fruit item, and spectroscopically analyzes transmitted light to obtain quality values for sugar content, acidity, and the like of the object to be measured.

### CITATION LIST

### [PATENT LITERATURE]

PATENT LITERATURE 1: Japanese Laid-Open Patent Publication No. 2020-101409

### SUMMARY OF THE INVENTION

A management system of the present disclosure is a management system for a plurality of plants aligned along a row direction. This management system includes a measurement device that is provided in a moving body moving along the row direction and acquires measurement information on fruit items of the plurality of plants, a positioning device that is provided in the moving body and acquires position information on the moving body, a management device that executes first identification processing of identifying a target plant bearing a fruit item among the fruit items measured by the measurement device from among the plurality of plants. In the first identification processing, the target plant is identified based on the position information.

### BRIEF DESCRIPTION OF DRAWINGS

[FIG. 1] FIG. 1 is a diagram illustrating an example of an overall configuration of a management system according to an embodiment.
[FIG. 2] FIG. 2 is a block diagram illustrating an in-vehicle network of an agricultural machine.
[FIG. 3] FIG. 3 is a block diagram illustrating a configuration example of a management server.
[FIG. 4] FIG. 4 is a plan view illustrating an example of a field.
[FIG. 5] FIG. 5 is a view for explaining a training method.
[FIG. 6] FIG. 6 is a sequence chart illustrating processing when quality measurement is performed by the management system.
[FIG. 7] FIG. 7 is a diagram illustrating an example of contents of a training information database.
[FIG. 8] FIG. 8 is a view illustrating an example of a measurement region when the quality measurement of a fruit item of a plant is performed.
[FIG. 9] FIG. 9 is a flowchart illustrating an example of first identification processing.
[FIG. 10] FIG. 10 is a diagram illustrating an example of contents of a position-shape database.
[FIG. 11] FIG. 11 is a diagram for explaining how to obtain a threshold value X.
[FIG. 12] FIG. 12 is a diagram schematically illustrating an example of how to compare pieces of point cloud data against each other.
[FIG. 13] FIG. 13 is a diagram illustrating an example of contents of a measurement information database.
[FIG. 14] FIG. 14 is a diagram illustrating an example of a second area.
[FIG. 15] FIG. 15 is a sequence chart illustrating a modification of processing when the quality measurement is performed.

### DETAILED DESCRIPTION

### [Problems to be solved by the present disclosure]

In general, it is preferable to measure quality of fruit items cultivated in a field for each plant.

In order to perform the quality management of the fruit items for each plant, it is conceivable to assign identification information (IDs) to respective plants.

In this case, it is necessary for a worker performing the quality measurement in the field to identify an ID of a plant being a measurement target and then perform the quality measurement of a fruit item.

Here, in order for the worker to identify the ID of the plant, a method is conceivable in which information tags, such as an RFID, a barcode, and a QR code (registered trademark), with identification information recorded are attached to the respective plants, and the worker reads the information tags before the measurement to acquire identification information on the plant being the measurement target.

However, with the identification method for the plants using the information tags, in addition to the quality measurement of the fruit items, it has to perform work of acquiring the identification information from the information tags at all times on the worker's end.

Moreover, on the manager's end, it is necessary to perform work of preparing the information tags, attaching the information tags to the plants, and the like.

In this manner, with the identification method for the plants using the information tags, there is a problem in that workloads increase on both the worker's end and the manager's end.

### [Advantageous effect of the present disclosure]

According to the present disclosure, it is possible to reduce the workloads.

First, contents of an embodiment will be listed and described.

### [Solution to problem]

(1) A management system of the present disclosure is a management system for a plurality of plants aligned along a row direction. This management system includes a measurement device that is provided in a moving body moving along the row direction and acquires measurement information on fruit items of the plurality of plants, a positioning device that is provided in the moving body and acquires position information on the moving body, a shape detection device that is provided in the moving body and detects a shape of a target plant bearing a fruit item among the fruit items measured by the measurement device, and a management device that identifies the target plant. The management device includes a processing unit that executes first identification processing of identifying, based on the position information, the target plant bearing the fruit item measured by the measurement device from among the plurality of plants, and second identification processing of, when the target plant is unable to be identified by the first identification processing, identifying the target plant based on a detection result of the shape detection device.

According to the above configuration, the positioning device is provided in the moving body provided with the measurement device. Thus, if positions of the plurality of plants are captured in advance, a plant closest to the moving body can be identified based on the position information acquired by the positioning device. That is, the plant closest to the moving body can be identified as the target plant among the plurality of plants.

Thus, it is not necessary to read information tags or the like on the end of a worker who performs the measurement, and on the manager's end, it is not necessary to prepare the information tags.

As a result, the workloads can be reduced on both the worker's end and the manager's end. Furthermore, when the target plant cannot be identified by the first identification processing, the management device can further execute the second identification processing of identifying the target plant based on the detection result of the shape detection device.

Thus, when the target plant cannot be identified based on the position information, it is possible to identify the target plant using the detection result of the shape detection device.

(2) It is preferable that in the management system according to the above (1), the second identification processing include processing of acquiring shape information on the target plant based on the detection result, and processing of identifying the target plant from among the plurality of plants based on a comparison between the shape information on the target plant and shape information, acquired in advance, on the plurality of plants.

(3) In the management system according to the above (1) or (2), the shape detection device may include at least one of a LIDAR and a camera.

When the shape detection device is the LIDAR, the shape information can be acquired as point cloud data. In the case of the camera, the shape information can be acquired as image data.

(4) In the management system according to the above (1), the first identification processing may include comparison processing of comparing a predetermined threshold value and a distance between reference positions of the plurality of plants and a position from the position information, and processing of identifying the target plant based on a result of the comparison processing.

In this case, the plant closest to the moving body can be identified as the target plant among the plurality of plants by the distance between the reference positions and the position from the position information.

In addition, adjustment can be made for a distance to the target plant to be identified by comparing the distance between the reference positions and the position from the position information with the threshold value, and for example, it is possible to make a configuration in such a way as to identify the target plant taking into account an error contained in the position information.

(5) It is preferable that in the management system according to the above (1), the first identification processing include processing of specifying areas that do not overlap each other around respective reference positions of the plurality of plants, and processing of, when the position from the position information is within one area among a plurality of the areas, identifying a plant relevant to the one area as the target plant among the plurality of plants.

In this case, it is possible to identify a plant having a reference position closest to the moving body as the target plant.

(6) Here, there are cases where branches of the plant are trained to extend in opposite directions along the row direction with respect to a trunk, and where a branch of the plant is trained to extend in one direction. In the case where the branch extends in one direction with respect to the trunk, when the moving body is located between trunks adjacent to each other, a plant having a trunk closest to the moving body is not necessarily the target plant.

It is thus preferable that in the management system according to the above (5), when the first identification processing further includes processing of acquiring extending directions of branches extending along the row direction from the reference positions for the plurality of plants, the areas be set to regions different according to the extending directions.

In this case, it is possible to appropriately identify the target plant by varying the areas according to the extending directions of the branches.

(7) In the management system according to any one of the above (1) to (6), the processing unit may be configured to further execute processing of, when the target plant is unable to be identified by the first identification processing, acquiring extending directions of branches extending along the row direction from trunks of the plurality of plants, and third identification processing of identifying the target plant based on the position information and the extending directions.

(8) In the management system according to any one of the above (1) to (7), the management device may be configured to further execute processing of, when identifying the target plant, storing identification information assigned to the target plant and the measurement information in association with each other.

In this case, it is possible to manage the measurement information and the identification information of the plant in association with each other, which facilitates management of the measurement information.

(9) In the management system according to any one of the above (1) to (7), the fruit items may be ones including grapes.

In this case, it is possible to appropriately manage the quality of the grapes for each plant.

(10) In the management system according to the above (9), the measurement information may include at least any one of sugar content, acidity, pH, and polyphenol content ratio.

In this case, it is possible to manage numerical values suitable for the quality of the grapes.

(11) Further, the present disclosure regarded from another aspect is a management device for a plurality of plants aligned along a row direction. This management device includes a processing unit that executes processing of acquiring measurement information on fruit items of the plurality of plants by a measurement device provided in a moving body that moves along the row direction, processing of acquiring position information on the moving body by a positioning device provided in the moving body, processing of acquiring, by a shape detection device provided in the moving body, a detection result of a target plant bearing a fruit item among the fruit items measured by the measurement device, first identification processing of identifying the target plant based on the position information from among the plurality of plants, and second identification processing of, when the target plant is unable to be identified by the first identification processing, identifying the target plant based on the detection result.

(12) Further, the present disclosure regarded from another aspect is a management method for a plurality of plants aligned along a row direction. This management method includes a step of acquiring measurement information on fruit items of the plurality of plants by a measurement device provided in a moving body that moves along the row direction, a step of acquiring position information on the moving body by a positioning device provided in the moving body, a step of acquiring, by a shape detection device provided in the moving body, a detection result of a target plant bearing a fruit item among the fruit items measured by the measurement device, a first identification step of identifying the target plant based on the position information from among the plurality of plants, and a second identification step of, when the target plant is unable to be identified by the first identification step, identifying the target plant based on the detection result.

(13) The present disclosure regarded from another aspect is a computer program for causing a computer to execute management processing for a plurality of plants aligned along a row direction. This computer program is a computer program for causing the computer to execute a step of acquiring measurement information on fruit items of the plurality of plants by a measurement device provided in a moving body that moves along the row direction, a step of acquiring position information on the moving body by a positioning device provided in the moving body, a step of acquiring, by a shape detection device provided in the moving body, a detection result of a target plant bearing a fruit item among the fruit items measured by the measurement device, a first identification step of identifying the target plant based on the position information from among the plurality of plants, and a second identification step of, when the target plant is unable to be identified by the first identification step, identifying the target plant based on the detection result.

### [Details of embodiments of the present disclosure]

Hereunder, preferred embodiments will be described with reference to the drawings.

Note that at least some of the embodiments described below may be freely combined.

### [Overall configuration of management system]

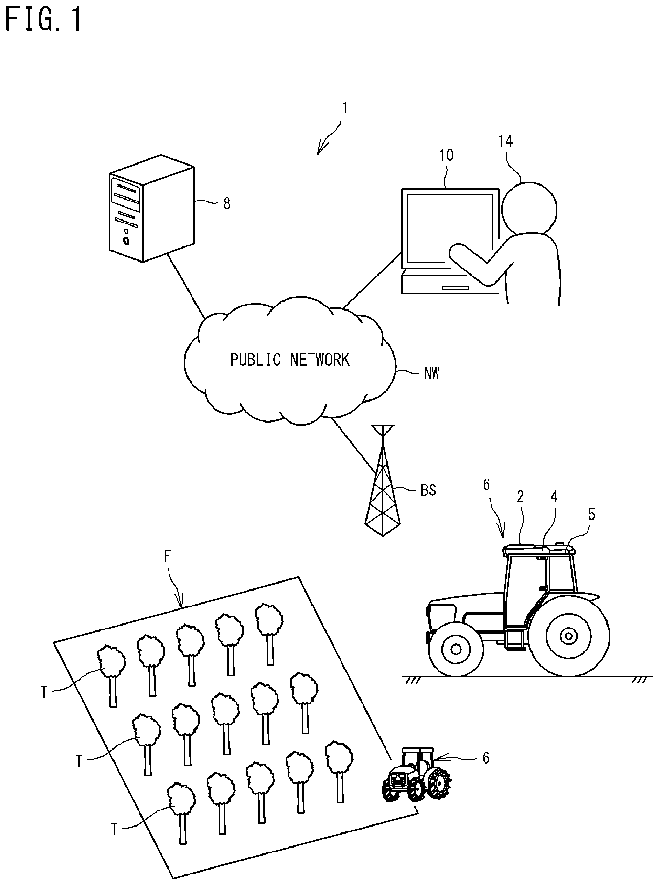

FIG. 1 is a diagram illustrating an example of an overall configuration of a management system according to an embodiment.

In FIG. 1, a management system 1 has a function of managing plants cultivated in a field F.

The field F of the present embodiment is, for example, a vineyard for cultivating grapes to be a raw material for wine. Thus, a plurality of plants T are cultivated in the field F as plants. The plurality of plants T are fruit plants and are grapevines. The plurality of plants T are arranged in a plurality of rows.

The management system 1 has a function of measuring values related to quality of fruit items of grapes fruiting on the plants T. More specifically, the management system 1 acquires measured values related to the quality of the fruit items using a sensor or a measurement device. The measured values include sugar content, acidity, pH, polyphenol content ratio, and the like.

The management system 1 assigns identification information (plant IDs) to the plurality of plants T, and manages the identification information and the measured values in association with each other. This allows the management system 1 to manage the measured values for each plant.

The management system 1 includes a quality measurement device 2, a positioning device 4, a shape detection device 5, an agricultural machine 6, a management server 8, and a management terminal 10.

The quality measurement device 2, the positioning device 4, and the shape detection device 5 are mounted on the agricultural machine 6. The quality measurement device 2 is a device that performs the above-described measurement related to the quality of the fruit items. The shape detection device 5 is a device for detecting shapes of the plants subjected to the measurement related to the quality of the fruit items.

The agricultural machine 6, the management server 8, and the management terminal 10 are communicably connected to each other via a public network NW, such as the Internet.

The agricultural machine 6 has, for example, a communication function using a mobile communication system. The agricultural machine 6 is connected to the public network NW via a radio base station BS of the mobile communication system.

The management server 8 has a function of managing the measured values for each plant T.

The management terminal 10 is a terminal operated by an operator 14 of the management system 1. The management terminal 10 has a function of accepting an operation on the management system 1 by the operator 14 and a function of outputting, to the operator 14, the measured values and the like managed by the management server 8.

The agricultural machine 6 is a moving body that moves in the field F. The agricultural machine 6 is, for example, a tractor. The agricultural machine 6 can travel in the field F. The agricultural machine 6 can travel between the rows of the plurality of plants T in the field F and move close to all the plants T in the field F. The agricultural machine 6 can travel in the field F by manual driving by an operation of a worker, or can travel in the field F by autonomous driving based on a control command from the management server 8 or a control command from the management terminal 10 based on an input of the operator 14.

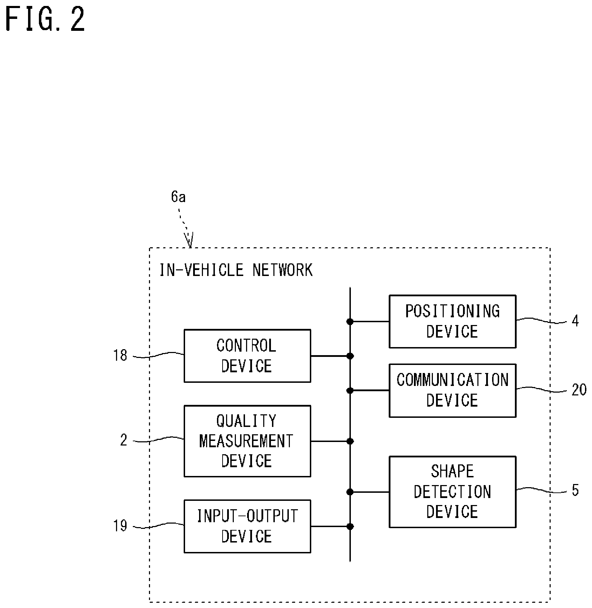

FIG. 2 is a block diagram illustrating an in-vehicle network of the agricultural machine 6.

The agricultural machine 6 includes an in-vehicle network 6a conforming to a communication standard, such as a controller area network (CAN). The in-vehicle network 6a includes a control device 18, an input-output device 19, and a communication device 20.

The communication device 20 has a function as a mobile terminal in the mobile communication system. Thus, the communication device 20 performs radio communication with the radio base station BS.

The control device 18 is an electronic control unit (ECU) that controls a traveling system and a work system of the agricultural machine 6. The control device 18 controls each unit of the agricultural machine 6 based on a driving operation of the worker.

The control device 18 is connected to the public network NW via the communication device 20. Thus, the control device 18 is connected to the management server 8 and the management terminal 10 so as to be communicable to each other. The control device 18 exchanges necessary information with the management server 8 and the management terminal 10 via the public network NW.

When the agricultural machine 6 is capable of the autonomous driving, the control device 18 controls cameras and sensors that recognize surroundings of the agricultural machine 6, and a drive system and a steering system of the agricultural machine 6, and performs processing of executing the autonomous driving, based on the control command from the management server 8 or the management terminal 10, or the like.

The input-output device 19 has a function of accepting the operation of the worker and a function of outputting information and the like to the worker.

The quality measurement device 2, the positioning device 4, and the shape detection device 5 are connected to the in-vehicle network 6a.

The quality measurement device 2, the positioning device 4, and the shape detection device 5 are connected to the public network NW by the communication device 20. Thus, the quality measurement device 2, the positioning device 4, and the shape detection device 5 are connected to the management server 8 and the management terminal 10 so as to be communicable to each other.

This allows the quality measurement device 2, the positioning device 4, and the shape detection device 5 to provide necessary information to the management server 8 and the management terminal 10.

The quality measurement device 2, the positioning device 4, and the shape detection device 5 are controllable by the management server 8 and the management terminal 10.

The positioning device 4 is a device that measures a vehicle position by GNSS positioning, specifically, a multi-GNSS receiver supporting a plurality of types of satellite positioning systems. The positioning device 4 communicates with, other than the GPS, a satellite of at least one of the following systems to measure the vehicle position.

Examples of the satellite positioning systems other than the GPS: "GLONASS" of Russia, "Galileo" of the European Commission, "BeiDou" of China, "Michibiki (QZSS)" of Japan, "IRNSS" of India, "WAAS" of the United States, "EGNOS" of Europe, "MSAS" of Japan, and "GAGAN" of India.

The positioning system of the positioning device 4 may be either autonomous positioning or differential positioning; however, since high accuracy is required in field work, it is preferable to employ the differential positioning.

Consequently, the positioning device 4 may be a rover of real-time kinematics (RTK)-GNSS. In this case, the rover wirelessly receives correction information from a base installed at a point of which coordinates are known, and corrects a detected position based on the received correction information. Hence, the vehicle position can be measured with higher accuracy as compared with a case without correction.

The quality measurement device 2 is a device that measures the quality of the fruit item by spectroscopic analysis using near-infrared light. The quality measurement device 2 collects light within a predetermined measurement region and performs the spectroscopic analysis. The quality measurement device 2 has a function of spectrally separating light from the fruit item that is contained in the measurement region and acquiring spectral information in a near-infrared region. The spectral information in the near-infrared region includes information indicating the quality values of the fruit items. Thus, the quality measurement device 2 outputs the spectral information in the near-infrared region as measurement information. The quality measurement device 2 provides the measurement information to the management server 8.

The management server 8 acquires the measured values for the sugar content, the acidity, pH, the polyphenol content ratio, and the like based on the measurement information.

The quality measurement device 2 includes, for example, a device that mainly spectrally analyzes reflected light from the fruit item and a device that mainly spectrally analyzes transmitted light from the fruit item. The device that performs the measurement using the reflected light from the fruit item includes a spectral imaging camera, such as a multispectral camera and a hyperspectral camera. The device that performs the measurement using the transmitted light from the fruit item includes a device including a light projection unit and a light reception unit that are arranged so as to be brought close to the fruit item.

The shape detection device 5 is a device that detects the shape of the plant bearing the fruit item subjected to the measurement by the quality measurement device 2. The shape detection device 5 of the present embodiment is, for example, a light detection and ranging or laser imaging detection and ranging (LIDAR).

A region of detection by the shape detection device 5 is set to contain the region of measurement by the quality measurement device 2. Thus, the shape detection device 5 detects presence or absence of an object in the measurement region of the quality measurement device 2 and a position and a shape of the object. This allows the shape detection device 5 to detect the shape of the plant bearing the fruit item subjected to the measurement. The detection result is provided to the management server 8. The management server 8 acquires point cloud data based on the detection result of the shape detection device 5. The point cloud data is shape information. The point cloud data indicates three-dimensional coordinates of each position in the object contained in the detection region of the shape detection device 5.

### [Management server 8]

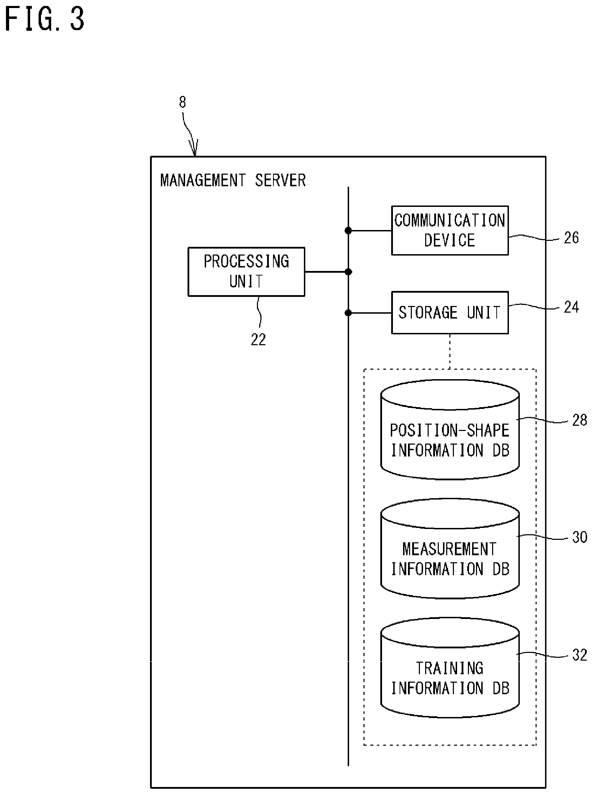

FIG. 3 is a block diagram illustrating a configuration example of the management server 8.

As illustrated in FIG. 3, the management server 8 (management device) is a type of information processing device including a processing unit 22, a storage unit 24, and a communication device 26.

The communication device 26 is a communication interface capable of communicating with an external device via the public network NW.

The processing unit 22 is, for example, a variety of types of processors adapted to control of a computer, such as a central processing unit (CPU), a graphics processing unit (GPU), a digital signal processor (DSP), and a field programmable gate array (FPGA).

The storage unit 24 is, for example, a flash memory, a hard disk, a read-only memory (ROM), a random-access memory (RAM), or the like.

The storage unit 24 stores a computer program for causing the processing unit 22 to execute the program, and necessary information. The processing unit 22 implements various processing functions of the processing unit 22 by executing computer programs stored in a computer-readable non-transitory recording medium, such as the storage unit 24.

The storage unit 24 also stores a position-shape information database 28, a measurement information database 30, and a training information database 32. These databases 28, 30, and 32 may be stored in a storage device (illustration omitted) connected to the management server 8.

These databases 28, 30, and 32 will be described in detail later.

The processing unit 22 has a function of acquiring the measured values for the sugar content, the acidity, pH, the polyphenol content ratio, and the like based on the measurement information provided from the quality measurement device 2 as described above. In addition, the processing unit 22 acquires the point cloud data based on the detection result from the shape detection device 5.

Further, the processing unit 22 has a function of executing processing, such as first identification processing and second identification processing, and managing the measured values for each plant. These pieces of processing will be described in detail later.

### [Quality measurement of fruit items in field F]

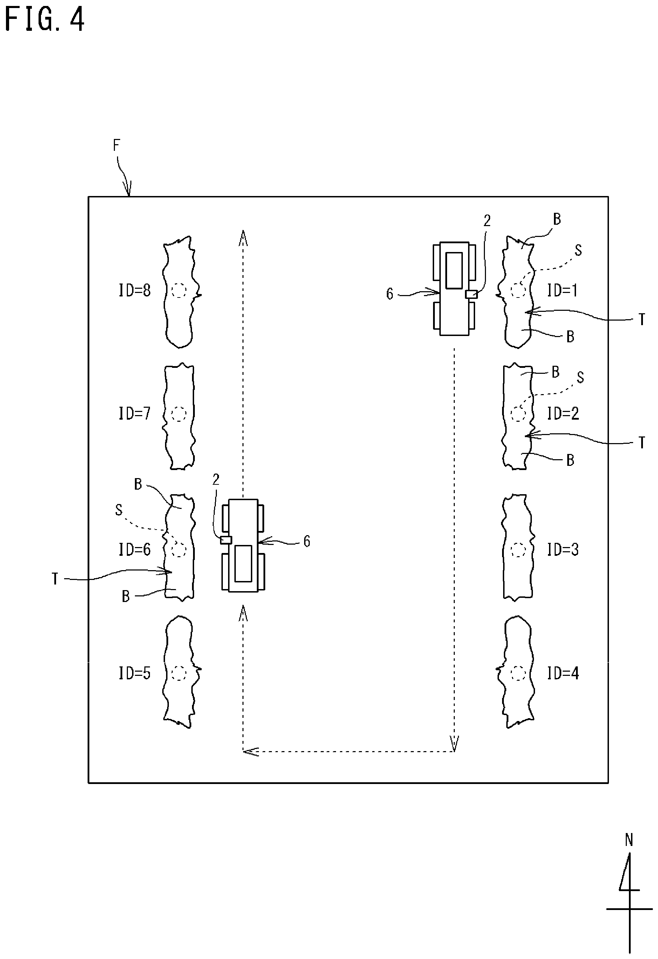

FIG. 4 is a plan view illustrating an example of the field F. It is assumed that in FIG. 4, the vertical direction on the sheet is the north-south direction, and the horizontal direction on the sheet is the east-west direction.

The quality measurement of the fruit items is performed by the agricultural machine 6 traveling in the field F.

In a field F illustrated in FIG. 4, for example, a plurality of the plants T (8 plants in the illustrated example) are cultivated. The plants T are arranged in such a way as to form rows aligned in the north-south direction. The plants T constitute two rows. One row includes four plants T. It is assumed that spacing (spacing in the east-west direction) between the two rows is wider than spacing (spacing in the north-south direction) between the plants T adjacent to each other in the same row.

The agricultural machine 6 travels between the two rows.

The eight plants T cultivated in the field F are assigned respective plant IDs as identification information. The eight plants T are assigned integers from 1 to 8 as the plant IDs.

The plants T of the present embodiment are trained on a trellis system.

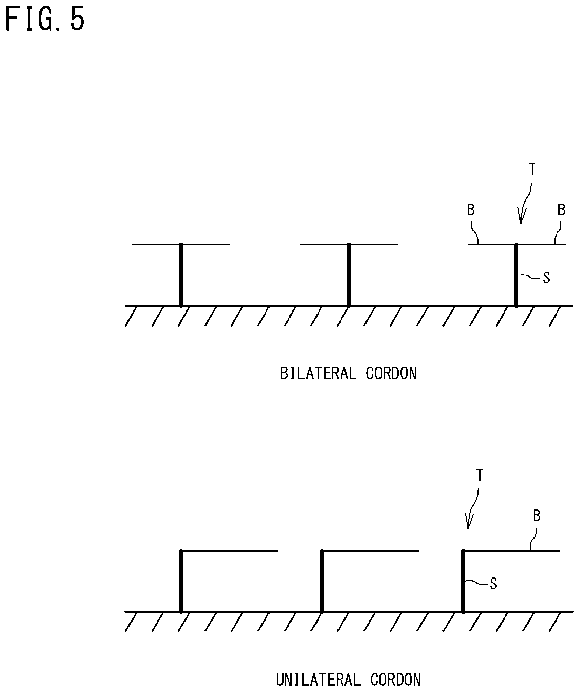

FIG. 5 is a view for explaining a training method. In FIG. 5, the upper view is a schematic view of bilateral cordon.

In the upper view of FIG. 5, the plant T is trained on the trellis system. Thus, branches B extend in a lateral direction from a trunk S. In the bilateral cordon, the branches B extend to opposite sides of the trunk S. The bilateral cordon refers to a training system in which the branches B extend to the opposite sides of the trunk S in this manner, and a shape of the plant T with the branches B extending to the opposite sides of the trunk S.

In FIG. 5, the lower view is a schematic view of unilateral cordon. In the lower view of FIG. 5, the plant T is also trained on the trellis system. In the unilateral cordon, a branch B extends only to one side of a trunk S. The unilateral cordon refers to a training system in which the branch B extends to one side of the trunk S in this manner, and a shape of the plant T with the branch B extending to one side of the trunk S.

In general, a plurality of plants T cultivated in one field are trained in the same manner.

As illustrated in FIG. 4, it is assumed that the plants T of the present embodiment are trained in the bilateral cordon system. It is assumed that branches B of the plants T of the present embodiment extend in the north-south direction.

The agricultural machine 6 travels along extending directions of the branches B of the plants T.

The quality measurement device 2 is provided on a side of the agricultural machine 6. In principle, the quality measurement device 2 is oriented in a direction orthogonal to the extending directions.

Quality measurement work for the fruit items in the field F is performed on all the eight plants T in the field F.

The quality measurement may be performed by an operation of the worker driving the agricultural machine 6, or may be performed by remote control based on commands from the operator 14.

When the quality measurement is performed by the worker, the agricultural machine 6 is manually driven by the worker. Further, the quality measurement by the quality measurement device 2 is performed by manual operations of the worker.

When the quality measurement is performed by the remote control based on the commands from the operator 14, the agricultural machine 6 travels by autonomous driving, and the quality measurement device 2 performs the quality measurement by control based on commands from the operator 14.

In the present embodiment, a case where the worker driving the agricultural machine 6 performs the quality measurement is described.

The worker mounts the agricultural machine 6 and travels on the side of the rows of the plurality of plants T in the field F along a broken line in FIG. 4. The agricultural machine 6 moves close to each plant T in order from the plant T with the plant ID=1, and the quality measurement is performed. When moving close to each plant T and reaching the side of each plant T, the worker stops the agricultural machine 6 and performs the quality measurement with the quality measurement device 2. This allows the quality measurement of the fruit item borne on each plant T to be performed.

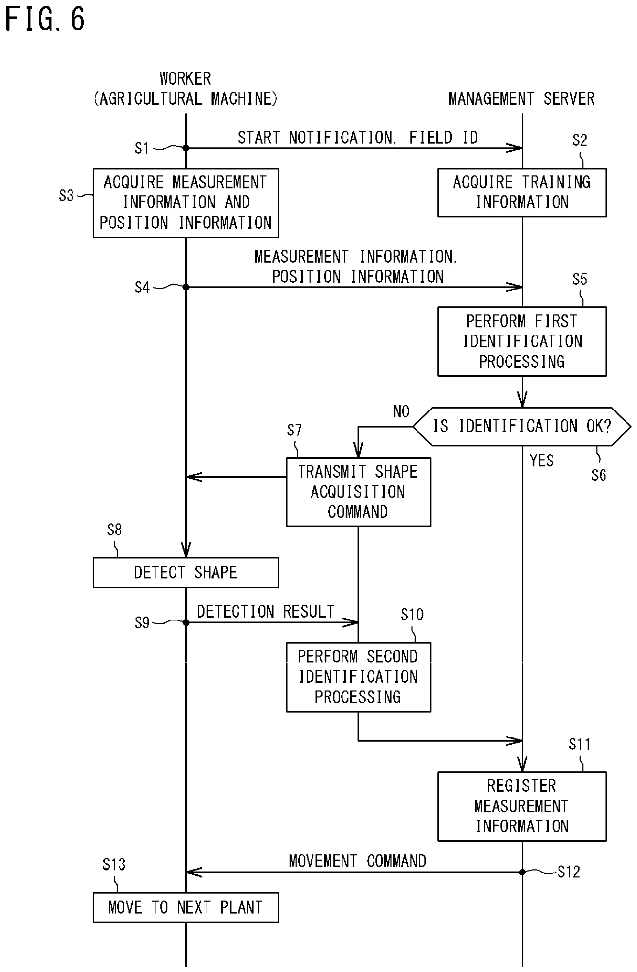

FIG. 6 is a sequence chart illustrating processing when the quality measurement is performed by the management system 1.

In FIG. 6, a case where, as illustrated in FIG. 4, the worker stops the agricultural machine 6 on the side (west side) of the plant T with the plant ID=1 and measures a fruit item of the plant T with the plant ID=1, will be described.

In FIG. 6, first, the worker transmits, to the management server 8, a start notification to the effect that measurement work is started and a field ID of the field F to be worked on (step S1 in FIG. 6).

The management server 8 manages a plurality of fields F. Respective field IDs are set to the plurality of fields F as identification information. The management server 8 can recognize the field F to be worked on, by receiving the field ID.

The worker may transmit the start notification and the field ID using the input-output device 19 of the agricultural machine 6, or may transmit the start notification and the field ID using a mobile terminal that is connectable to the mobile communication system and is owned by the worker.

The management server 8 when receiving the start notification and the field ID, acquires training information relevant to the received field ID (step S2 in FIG. 6).

The management server 8 refers to the training information database 32 and acquires the training information.

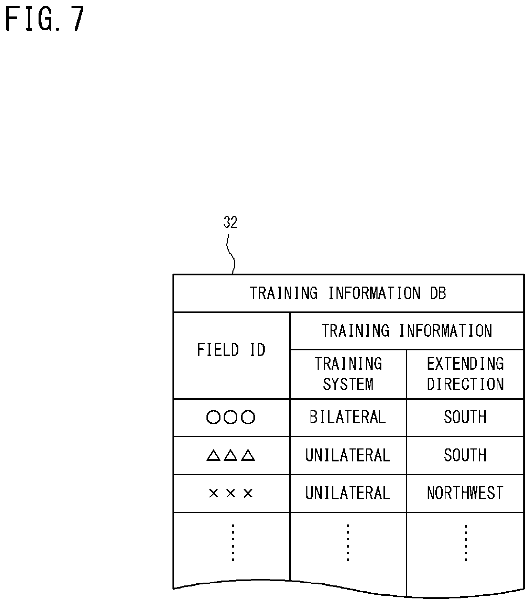

FIG. 7 is a diagram illustrating an example of contents of the training information database 32.

The training information is information indicating contents of training of plants T for each field F. The training information contains the "training system" and the "extending direction". The "training system" is information indicating one of the bilateral cordon and the unilateral cordon. Thus, one of "bilateral" and "unilateral" is registered in a field of "training system" in the training information database 32. The "extending direction" is information indicating a direction in which the branch(es) of each plant T extends.

In the training information database 32, the field IDs and the training information are registered in association with each other.

The management server 8 refers to the training information database 32 and acquires the training information relevant to the received field ID.

On the other hand, the worker when transmitting the start notification and the field ID, moves the agricultural machine 6 near a plant T that is a measurement target. Here, the worker moves the agricultural machine 6 to the side of the plant T with the plant ID=1 and stops the agricultural machine 6 (see FIG. 4). Next, the worker acquires measurement information and position information (step S3 in FIG. 6).

The worker operates the quality measurement device 2, contains the fruit item borne on the plant T with ID=1 in the measurement region, and measures the fruit item.

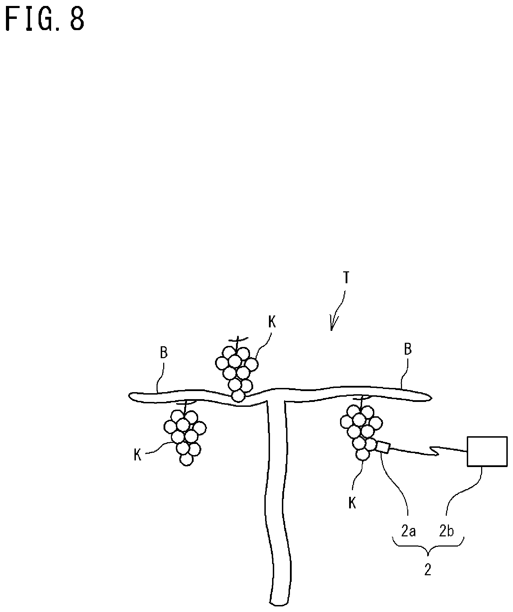

FIG. 8 is a view illustrating an example of the measurement region when the quality measurement of the fruit item of the plant T is performed.

As illustrated in FIG. 8, the worker measures a fruit item K borne on the plant T, which is a grape, using the quality measurement device 2.

FIG. 8 illustrates a case where the quality measurement device 2 is a spectroscopic analyzer that spectrally separates transmitted light from the grape.

As illustrated in FIG. 8, the quality measurement device 2 includes a light projection-reception unit 2a and a body unit 2b.

The light projection-reception unit 2a is attached to an arm (illustration omitted) that advances and retracts from the side of the agricultural machine 6 in a direction orthogonal to a traveling direction of the agricultural machine 6.

The light projection-reception unit 2a has a function of projecting near-infrared light to the fruit item K arranged close thereto. In addition, the light projection-reception unit 2a has a function of receiving transmitted light from the fruit item K. The transmitted light is light after the near-infrared light projected from the light projection-reception unit 2a is transmitted through the fruit item K.

The body unit 2b spectrally separates the transmitted light and acquires spectral information. The body unit 2b provides the spectral information to the management server 8 as the measurement information.

Thus, the measurement region of the quality measurement device 2 is a portion of the fruit item K to which the near-infrared light is emitted. In the case where the quality measurement device 2 is a spectral imaging camera, the measurement region is an imaging region of the spectral imaging camera.

At the time of the quality measurement, the worker advances the arm to move the light projection-reception unit 2a close to the fruit item K. Next, the worker causes the light projection-reception unit 2a to emit near-infrared light to the fruit item K and receive transmitted light.

This allows the worker to cause the quality measurement device 2 to acquire the measurement information.

The positioning device 4 acquires the position information indicating a current position of the agricultural machine 6. The positioning device 4 constantly acquires the position information.

Thus, the position information acquired by the positioning device 4 also contains position information on the agricultural machine 6 when the fruit item K is measured by the quality measurement device 2.

The acquired measurement information is transmitted to the management server 8 (step S4 in FIG. 6). The measurement information is transmitted to the management server 8 by the quality measurement device 2. The position information is transmitted to the management server 8 by the positioning device 4. The position information transmitted to the management server 8 is position information when the measurement information is acquired or when the measurement information is transmitted.

When receiving the measurement information and the position information, the management server 8 executes the first identification processing (step S5 in FIG. 6). The management server 8 uses, in the first identification processing, the position information received at the same timing as the reception of the measurement information.

The first identification processing is processing of identifying, based on the position information, the plant T bearing the fruit item K measured by the quality measurement device 2 from among the eight plants T in the field F.

In other words, the first identification processing is processing of identifying, based on the position information, which of the eight plants T in the field F is the plant T bearing the fruit item K measured by the quality measurement device 2.

Hereunder, the plant T that is identified and bears the fruit item K measured by the quality measurement device 2 is also referred to as a target plant Ta.

In the first identification processing, the management server 8 identifies a plant ID of the target plant Ta. The first identification processing is processing of identifying the plant ID of the target plant Ta based on the position information.

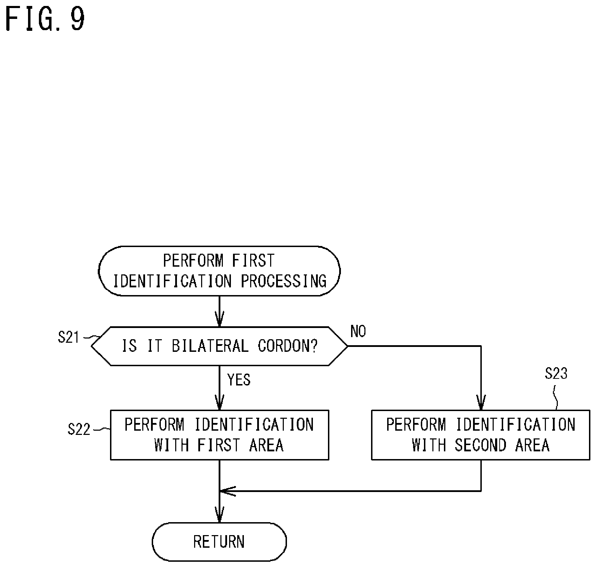

FIG. 9 is a flowchart illustrating an example of the first identification processing.

As illustrated in FIG. 9, the management server 8 determines whether the training system of the field F to be worked on is bilateral cordon (step S21 in FIG. 9).

When the training system of the field F to be worked on is bilateral cordon, the management server 8 proceeds to step S22, performs identification with a first area, and returns to step S5 in FIG. 6.

On the other hand, when the training system of the field F to be worked on is unilateral cordon, the management server 8 proceeds to step S23, performs identification with a second area, and returns to step S5 in FIG. 6.

The first area and the second area are areas for identifying the target plant Ta based on the position information from the positioning device 4.

Here, first, the identification with the first area (step S22 in FIG. 9) will be described.

In the identification with the first area, the management server 8 first refers to the position-shape information database 28.

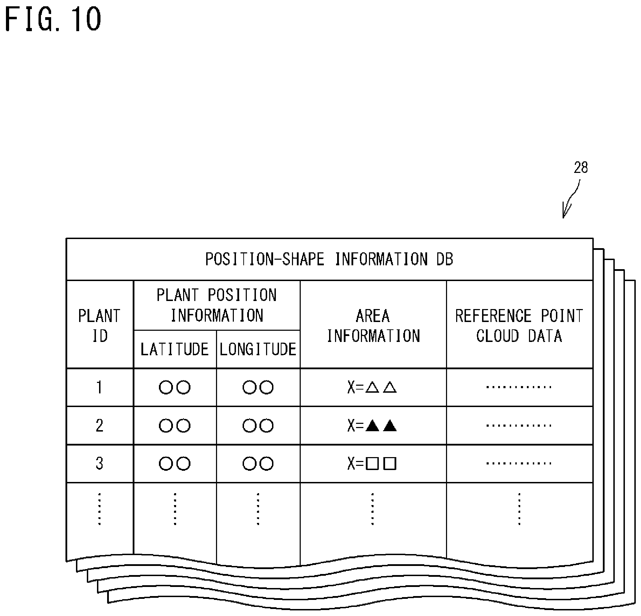

FIG. 10 is a diagram illustrating an example of contents of the position-shape information database 28. A plurality of the position-shape information databases 28 are stored in the storage unit 24. The plurality of position-shape information databases 28 pertain to the plurality of fields F.

The management server 8 refers to a position-shape information database 28 on the field F to be worked on among the plurality of position-shape information databases 28.

As illustrated in FIG. 10, in the position-shape information database 28 (also referred to as a position-shape DB 28 hereunder), the plant IDs, pieces of plant position information, pieces of area information, and pieces of reference point cloud data are registered in association with each other.

The plant IDs are the identification information assigned to the eight plants T in the field F as described above.

The pieces of plant position information contain latitudes and longitudes of trunks S of the plants T. In the present embodiment, reference positions indicating the positions of the plants T are the positions of the trunks S.

The pieces of plant position information are position information on the trunks S of the plants T. That is, the pieces of trunk position information are information indicating the reference positions of the plants T. The respective plants T are measured in advance, and the pieces of plant position information are registered in the position-shape information database 28.

The pieces of area information are each information necessary for setting the first area and the second area.

The pieces of reference point cloud data are each point cloud data obtained by scanning each plant T in advance by the LIDAR. Thus, the reference point cloud data is data indicating three-dimensional coordinates of positions of respective portions constituting the plant T. The reference point cloud data is data representing a three-dimensional shape of the plant T, and is reference shape information indicating a shape serving as a reference of the plant T.

The management server 8 refers to the position-shape information database 28, obtains distances D between the position from the position information and the positions of the respective eight plants T (positions indicated by the plant position information), and identifies a plant T with a smallest distance D from among the eight plants T.

Here, the agricultural machine 6 stops on the side of the plant T with the plant ID=1, so that it is assumed that the plant T with the smallest distance D is the plant T with the plant ID=1.

Thus, the management server 8 identifies the plant T with the smallest distance D as the plant T with the plant ID=1.

Next, the management server 8 determines whether the distance D is equal to or less than a threshold value X set for the plant T with the plant ID=1. The threshold value X is registered in the position-shape information database 28 as the area information.

When determining that the distance D is equal to or less than the threshold value X, the management server 8 identifies the target plant Ta as the plant T with the plant ID=1. When determining that the distance D is larger than the threshold value X, the management server 8 determines that the plant ID of the target plant Ta cannot be identified.

In this manner, in the first identification processing, the management server 8 performs comparison processing of comparing the threshold value X and the distance D between the positions of the trunks S of the plurality of plants T and the position indicated by the position information, and the processing of identifying the target plant Ta based on the result of the comparison processing.

The threshold value X is specified by the distances from the plant T with the plant ID=1 to surrounding plants T.

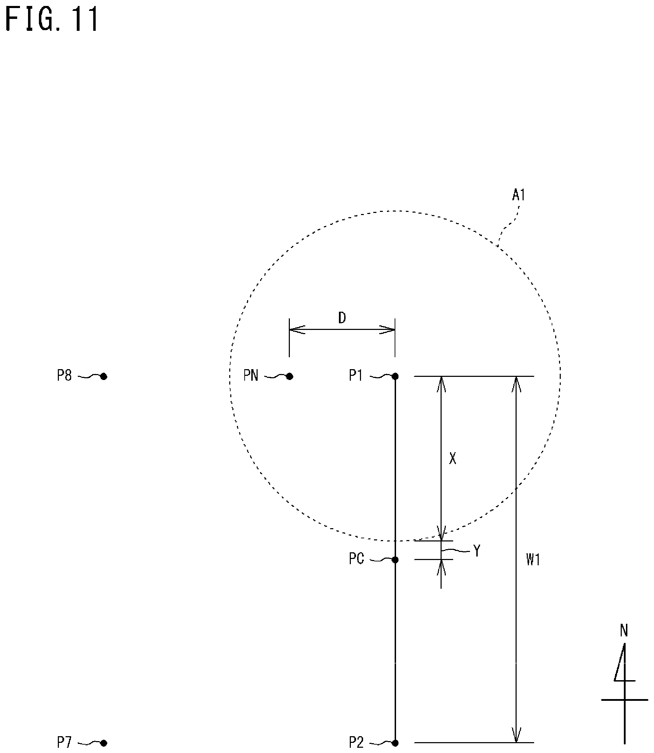

FIG. 11 is a diagram for explaining how to obtain the threshold value X.

In FIG. 11, point P1 is a point indicating the trunk S of the plant T with the plant ID=1. Point P2 is a point indicating the trunk S of the plant T with the plant ID=2. Point P8 is a point indicating the trunk S of the plant T with the plant ID=8. Point P7 is a point indicating the trunk S of the plant T with the plant ID=7.

First, the management server 8 identifies a plant T at a closest position among the plants T adjacent to and different from the plant T with the plant ID=1.

As described above, the spacing (spacing in the east-west direction) between the two rows is wider than the spacing (spacing in the north-south direction) between the plants T adjacent to each other in the same row. Thus, the plant T with the plant ID=2 (point P2) is closer to the plant T with the plant ID=1 than the plants T with the plant IDs=7 and 8 (point P7 and point P8). That is, the plant T with the plant ID=2 is closest to the plant T with the plant ID=1.

The management server 8 obtains the threshold value X based on a relation between the point P2 of the plant T with the plant ID=2 and the point P1.

The management server 8 obtains the threshold value X based on the following equation.$Threshold value X = \left(\left(W1\right)/2\right) - Y$

In the above equation, W1 is a distance between the point P1 and the point P2. Point PC is a midpoint between the point P1 and the point P2. Y is an error generated in the positioning device 4. The threshold value X is a value obtained by subtracting the error Y from a value of 1/2 of the distance W1 (distance between the point P1 and the point PC).

In FIG. 11, the center of the dashed circle is the point P1, and the radius of the dashed circle is the threshold value X. Thus, when point PN that is the position indicated by the position information is within the dashed circle, the distance D is equal to or less than the threshold value X. That is, an area surrounded by the dashed circle is a first area A1.

Since the first area A1 is specified based on the point P2 of the plant T closest to the point P1, the first area A1 does not overlap first areas similarly set for other points P2 and P8.

In the present embodiment, the threshold value X is registered in the position-shape information database 28; however, the management server 8 may sequentially obtain threshold values X while executing the first identification processing. The management server 8 may register a threshold value X obtained once in the position-shape information database 28 and reuse the threshold value X.

When the point PN is within the first area A1, the management server 8 identifies the plant T with the plant ID=1 as the target plant Ta. Conversely, when the point PN is outside the first area A1, the distance D is larger than the threshold value X. Thus, the management server 8 determines that the target plant Ta cannot be identified.

In this manner, the first identification processing includes processing of specifying, using threshold values X set for the respective eight plants T, first areas A1 that do not overlap each other around the trunks S of the respective eight plants T, and processing of, when the position from the position information is within one first area A1 among the plurality of first areas A1, identifying the plant T relevant to the one first area A1 as the target plant Ta among the eight plants T.

In the first identification processing, since the threshold values X are obtained based on the above equation, the target plant Ta can be identified while taking into account the error of the positioning device 4.

When the first identification processing (step S5 in FIG. 6) is finished, as illustrated in FIG. 6, the management server 8 proceeds to step S6. As a result of the first identification processing, when the target plant Ta cannot be identified, the management server 8 proceeds to step S7 and transmits a shape acquisition command to the agricultural machine 6 (step S7 in FIG. 6).

The agricultural machine 6 when receiving the shape acquisition command outputs the shape acquisition command to the worker via the input-output device 19. In this manner, the management server 8 outputs the shape acquisition command to the worker via the agricultural machine 6.

The worker recognizing that the shape acquisition command is output performs shape detection for the target plant Ta using the shape detection device 5 (step S8 in FIG. 6).

At this time, the detection region of the shape detection device 5 is set to contain the region of the measurement by the quality measurement device 2 as described above. Thus, the detection result of the shape detection device 5 contains information about a shape of the target plant Ta.

The detection result of the shape detection device 5 is transmitted to the management server 8 (step S9 in FIG. 6). The detection result is transmitted to the management server 8 by the shape detection device 5.

When receiving the detection result from the shape detection device 5, the management server 8 acquires point cloud data on the target plant Ta based on the detection result and executes the second identification processing (step S10 in FIG. 6).

The second identification processing is processing of identifying the plant ID of the target plant Ta based on the point cloud data that is shape information on the target plant Ta.

The management server 8 identifies the plant ID of the target plant Ta based on a comparison between the point cloud data (shape information) on the target plant Ta and the pieces of reference point cloud data (shape information) registered in the position-shape information database 28.

The management server 8 selects, as targets of the comparison with the point cloud data on the target plant Ta, the plant T with the plant ID=1 that is closest to the position indicated by the position information and the plant T with the plant ID=2 adjacent thereto in the row direction.

The management server 8 compares the point cloud data of the target plant Ta with the reference point cloud data on the plant T with the plant ID=1. The management server 8 also compares the point cloud data on the target plant Ta with the reference point cloud data on the plant T with the plant ID=2.

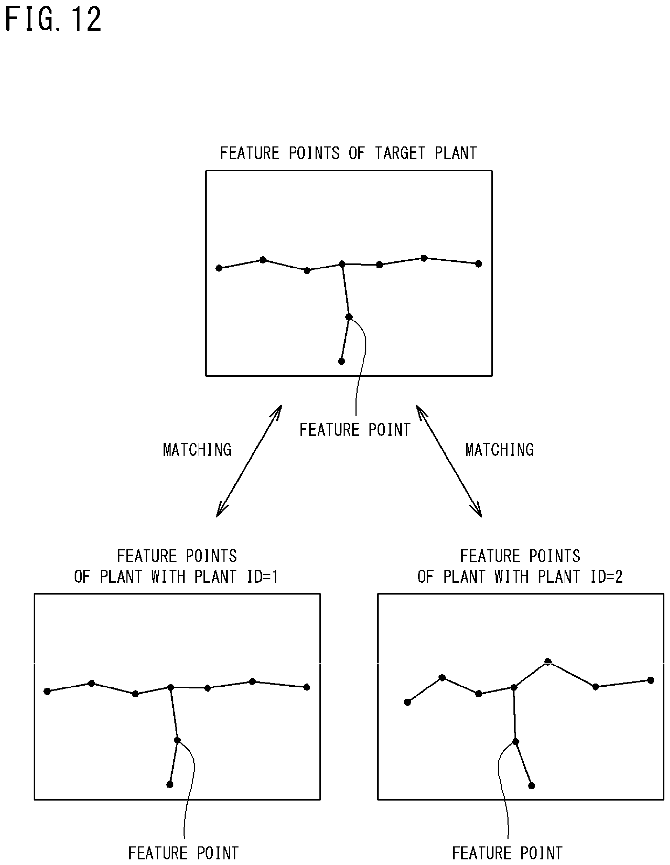

FIG. 12 is a diagram schematically illustrating an example of how to compare the pieces of point cloud data against each other.

The comparison of the pieces of point cloud data against each other by the management server 8 is performed by extracting feature points of the plants T from the point cloud data and matching the feature points with each other.

Thus, the management server 8 extracts the feature points of each plant T based on each piece of the point cloud data.

FIG. 12 schematically illustrates a plurality of the feature points of each plant in a rectangular frame.

The management server 8 performs matching between the feature points of the target plant Ta and the feature points of the plant T with the plant ID=1 to obtain a degree of similarity. In addition, the management server 8 performs matching between the feature points of the target plant Ta and the feature points of the plant T with the plant ID=2 to obtain a degree of similarity.

The management server 8 determines that a plant T having a high degree of similarity to the feature points of the target plant Ta is the same plant T as the target plant Ta.

In the present embodiment, the management server 8 identifies the plant T with the plant ID=1 as the target plant Ta.

In the present embodiment, the case of selecting, as the targets of the comparison against the point cloud data on the target plant Ta, the plant T with the plant ID=1 that is the plant T closest to the position indicated by the position information in the first identification processing, and the plant T with the plant ID=2 adjacent thereto in the row direction, is exemplified; however, when plants T are present on opposite sides of the plant T with the plant ID=1 in the row direction, the plants T on the opposite sides in the row direction may be used as the comparison targets.

In this case, plants T with a higher possibility of being the target plant Ta are chosen among the plurality of plants T, and the identification using the point cloud data can be performed.

After the second identification processing is completed (step S10 in FIG. 6), as illustrated in FIG. 6, the management server 8 proceeds to step S11 and registers the measurement information (step S11 in FIG. 6).

When the target plant Ta can be identified in step S5, the management server 8 proceeds to step S11 through step S6 and registers the measurement information (step S11 in FIG. 6).

The management server 8 registers the measurement information transmitted in step S4 in FIG. 6, in the measurement information database 30.

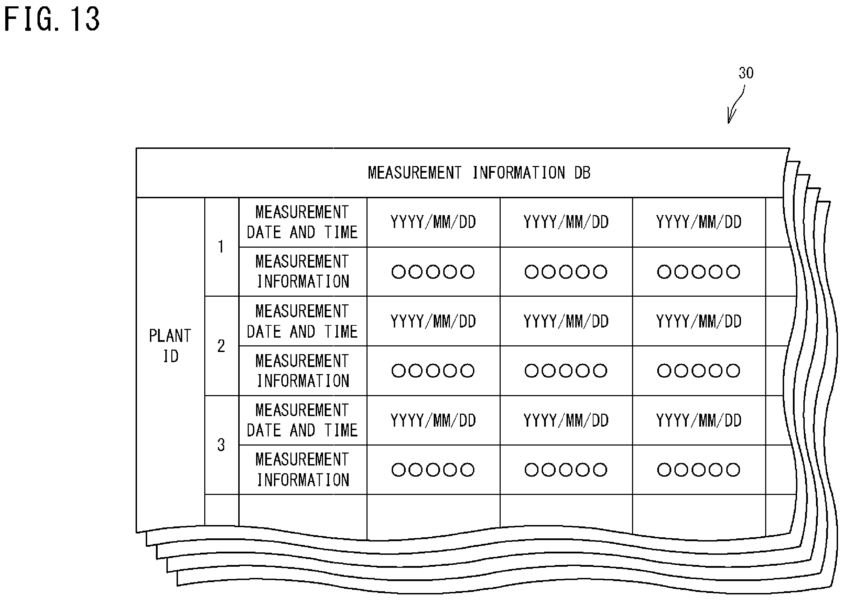

FIG. 13 is a diagram illustrating an example of contents of the measurement information database 30. A plurality of the measurement information databases 30 are stored in the storage unit 24. The plurality of measurement information databases 30 pertain to the plurality of fields F.

The management server 8 refers to a measurement information database 30 on the field F to be worked on among the plurality of measurement information databases 30.

As illustrated in FIG. 13, in the measurement information database 30 (also referred to as a measurement information DB 30 hereunder), the plant IDs and pieces of measurement information are registered in association with each other.

The pieces of measurement information are registered in the measurement information DB 30 together with dates and times when the measurement was performed.

The management server 8 registers the measurement information together with a measurement date and time in a field relevant to the plant ID of the identified target plant Ta.

Here, the management server 8 registers the measurement information and the measurement date and time in a field of the plant ID=1.

Note that the measurement date and time is provided to the management server 8 as information indicating the measurement date and time added to the measurement information by the quality measurement device 2. The measurement date and time may be set to a date and time when the measurement information is received by the management server 8.

When completing the registration of the measurement information, as illustrated in FIG. 6, the management server 8 transmits a movement command to the agricultural machine 6 (step S12 in FIG. 6).

The agricultural machine 6 when receiving the movement command outputs the movement command to the worker via the input-output device 19. In this manner, the management server 8 outputs the movement command to the worker via the agricultural machine 6.

The worker recognizing that the movement command is output moves the agricultural machine 6 to a next plant T (step S13 in FIG. 6).

Thereafter, the worker performs the quality measurement work on the plants T in order, and the management server 8 registers measurement information in the measurement information database 30 while identifying target plants Ta according to the quality measurement work.

According to the above configuration, the positioning device 4 is provided in the agricultural machine 6 (moving body) provided with the quality measurement device 2. The pieces of plant position information on the plurality of plants T are registered in advance in the position-shape information database 28. Hence, the plant closest to the agricultural machine 6 can be identified based on the position information acquired by the positioning device 4. That is, among the plurality of plants T, a plant T closest to the agricultural machine 6 can be identified as the target plant Ta.

Thus, it is not necessary to read information tags or the like on the end of the worker who performs the measurement, and on the manager's end, it is not necessary to prepare the information tags or the like provided to the plants T.

That is, the worker performs the quality measurement work and performs any necessary shape detection work, whereby the measured value obtained by the quality measurement work is managed for each plant T by the plant ID. Thus, it is not necessary for the worker to perform work related to management of the measured values.

As a result, the workloads can be reduced on both the worker's end and the manager's end.

In addition, in the present embodiment, if the target plant Ta cannot be identified based on the position information, the target plant Ta can be identified using the detection result of the shape detection device 5.

The first identification processing of the present embodiment includes the comparison processing of comparing the threshold value X and the distance D between the positions of the trunks S of the plurality of plants T and the position indicated by the position information, and the processing of identifying the target plant Ta based on the result of the comparison processing.

Thus, the plant T closest to the agricultural machine 6 can be identified as the target plant Ta among the plurality of plants T by the distance D.

In addition, adjustment can be made for the distance to the target plant Ta to be identified by comparing the distance D and the threshold value X, and for example, it is possible to make a configuration in such a way as to identify the target plant Ta taking into account the error of the positioning device 4 contained in the position information.

Returning to FIG. 9, when it is not determined as the bilateral cordon (i.e., the unilateral cordon) in step S21 of the first identification processing, the management server 8 proceeds to step S23 and performs the identification with the second area.

For example, it is assumed that the training system of the field F is unilateral cordon and the extending directions of the branches B are the south direction.

In the identification with the second area, the management server 8 refers to the position-shape information database 28 and sets the second area.

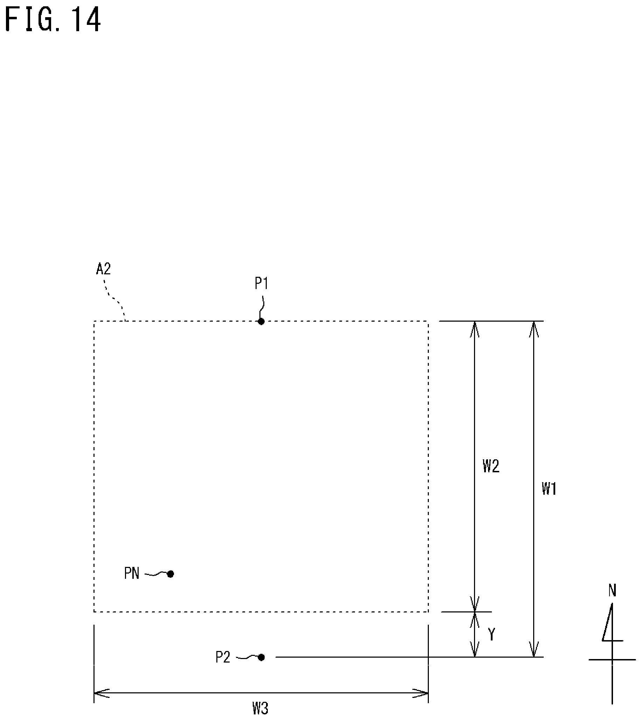

FIG. 14 is a diagram illustrating an example of the second area.

In FIG. 14, a second area A2 is set between point P1 and point P2.

In FIG. 14, the point P1 is a point indicating the trunk S of the plant T with the plant ID=1. Point P2 is a point indicating the trunk S of the plant T with the plant ID=2.

The second area A2 has a rectangular shape with each side extending along one of the north-south direction and the east-west direction.

In FIG. 14, W1 is a distance between the point P1 and the point P2. A distance W2 of the second area A2 in the north-south direction is a value obtained by subtracting an error Y from the distance W1. The error Y is an error generated in the positioning device 4. A distance W3 of the second area A2 in the east-west direction is the same as the distance W1.

In FIG. 14, since the training system is unilateral cordon and the extending direction of the branch B is the south direction, the branch B of the plant T with the plant ID=1 extends up to the vicinity of the point P2 as illustrated in FIG. 14.

Thus, in this case, the management server 8 sets, between the point P1 and the point P2, the second area A2 set for the plant T with the plant ID=1.

With a similar procedure, the management server 8 sets second areas A2 for the respective eight plants T.

When the position from the position information is within one second area A2 among the plurality of second areas A2, the management server 8 identifies a plant T relevant to the one second area A2 as a target plant Ta among the eight plants T.

Note that distances necessary for specifying the second areas A2 are registered in the position-shape information database 28. The management server 8 refers to the position-shape information database 28 to acquire and use the distances necessary for specifying the second areas A2.

In addition, the management server 8 may sequentially obtain necessary distances while executing the first identification processing. The management server 8 may register a value obtained once in the position-shape information database 28 and reuse the value.

When the target plant Ta cannot be identified with the second area A2 in the first identification processing, the management server 8 proceeds to steps S7 to S10 in FIG. 6 and executes the second identification processing. The second identification processing is as described above.

For example, in FIG. 14, point PN indicating the position of the agricultural machine 6 is located at a position closer to the point P2 than the point P1, and even in this case, the branch B of the plant T with the plant ID=1 having the trunk S at the point P1 is located on a side of a side surface of the agricultural machine 6.

As described above, the training systems of the branches B of the plants T include the bilateral cordon in which the plant is trained to extend in the opposite directions along the row direction with respect to the trunk S, and the unilateral cordon in which the plant is trained to extend in one direction. In the case of the unilateral cordon, when the agricultural machine 6 is located between the trunks S adjacent to each other, the plant T having the trunk S closest to the agricultural machine 6 is not necessarily the target plant Ta.

The first identification processing of the present embodiment therefore further includes the processing of acquiring the extending directions of the branches B extending along the row direction from the trunks S for the plurality of plants T, and the areas (first areas A1 and second area A2) having the regions different according to the extending directions are set.

In this manner, the target plant Ta can be appropriately identified by varying the regions of the areas according to the extending directions of the branches.

### [Others]

The embodiments disclosed herein should be construed as illustrative in all respects and not restrictive.

For example, in the above embodiment, the case where the shape detection device 5 is the LIDAR is exemplified; however, a camera may be used in place of the LIDAR. When the shape detection device 5 is a camera, the management server 8 acquires image data based on the detection result from the shape detection device 5. Further, the management server 8 identifies an imaged portion of the target plant Ta in the image data, and extracts feature points of the target plant Ta based on the imaged portion.

In the above embodiment, the quality measurement (step S3 in FIG. 6) using the quality measurement device 2 performed by operations of the worker and the shape detection (step S8 in FIG. 6) using the shape detection device 5 performed by operations of the worker can also be performed by the management server 8 remotely controlling the quality measurement device 2 and the shape detection device 5, without the operations of the worker.

Further, in the above embodiment, the case where the quality measurement device 2, the positioning device 4, and the shape detection device 5 are mounted on the agricultural machine 6 that is the moving body is exemplified; however, the quality measurement device 2, the positioning device 4, and the shape detection device 5 may be carried by the worker, in place of the agricultural machine 6. In this case, the worker himself or herself is the moving body, and the worker moves by walking and performs the quality measurement of the fruit items borne on the plants T.

In the above embodiment, the case where the field F is a vineyard and the plants T are grapevines is exemplified; however, the present invention is not limited thereto, and the plants T may be climbing fruits other than grapes. In addition, the field F is only required to cultivate plants other than the plants.

When the target plant Ta cannot be identified based on the position information on the agricultural machine 6, the target plant Ta may be identified based on the training information.

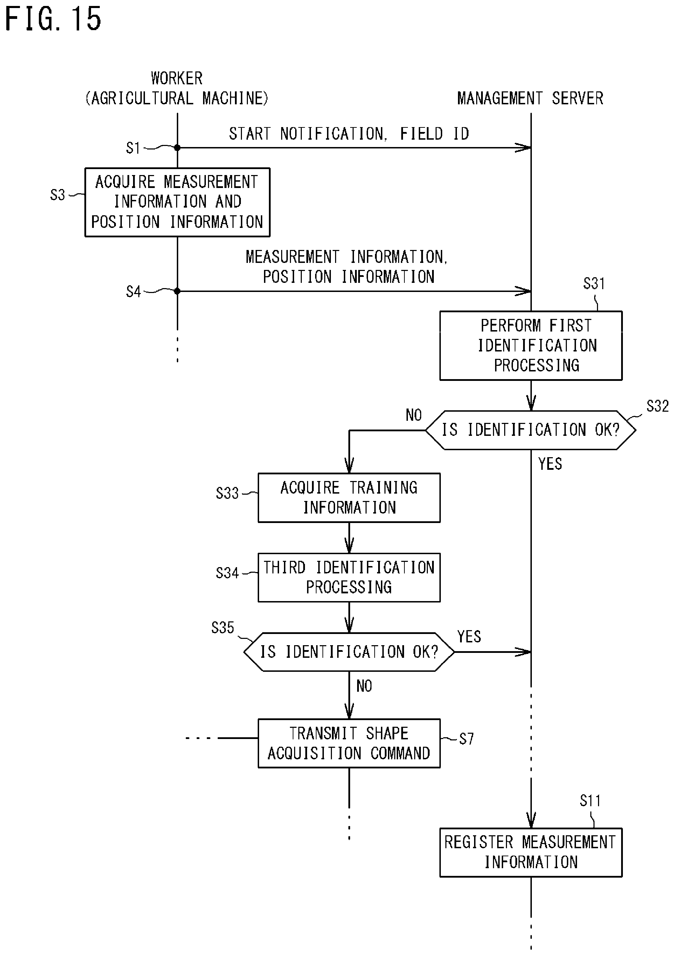

FIG. 15 is a sequence chart illustrating a modification of the processing when the quality measurement is performed. This is a modification of FIG. 6. In FIG. 15, in the case of the same reference signs, the same processing as that in FIG. 6 is executed.

As illustrated in FIG. 15, when a target plant Ta cannot be identified based on position information (No in S32 in FIG. 15), a management server 8 proceeds to step S33 and acquires training information on a field F (step S33 in FIG. 15). The management server 8 when acquiring the training information performs third identification processing (step S34 in FIG. 15).

In the third identification processing, when the training system of the field F indicated by the training information is unilateral cordon, the management server 8 identifies the target plant Ta in the third identification processing (Yes in step S35 in FIG. 15). That is, since a branch B extends only to one side of a trunk S in the unilateral cordon, the management server 8 can identify the target plant Ta by referring to a compass direction in the direction in which the branch B extends.

On the other hand, in the identification processing, when the training system of the field F indicated by the training information is bilateral cordon, branches B extend to opposite sides of a trunk S, so that the management server 8 determines that the target plant Ta cannot be identified in the third identification processing (No in step S35 in FIG. 15).

As a result of the third identification processing, when the target plant Ta cannot be identified (No in step S35 in FIG. 15), the management server 8 proceeds to step S7 and transmits a shape acquisition command to an agricultural machine 6 (step S7 in FIG. 15). Then, the management server 8 acquires point cloud data on the target plant Ta based on a detection result, executes second identification processing, and identifies a plant ID of the target plant Ta based on the point cloud data that is shape information on the target plant Ta through the second identification processing.

In this manner, in the present modification, when the target plant Ta cannot be identified by the first identification processing, the management server 8 can acquire the training information and identify the target plant Ta based on the position information and the training information. In addition, if the target plant Ta cannot be identified using the training information, the management server 8 identifies the target plant Ta also using the shape.

The scope of the present invention is defined not by the above meaning but by the claims, and is intended to include meanings equivalent to the claims and all modifications within the scope.

### REFERENCE SIGNS LIST

- 1: management system
- 2: quality measurement device
- 4: positioning device
- 5: shape detection device
- 6: agricultural machine
- 6a: in-vehicle network
- 8: management server
- 10: management terminal
- 14: operator
- 18: control device
- 19: input-output device
- 20: communication device
- 22: processing unit
- 24: storage unit
- 26: communication device
- 28: shape information database
- 30: measurement information database
- 32: training information database
- A1: first area
- A2: second area
- B: branch
- BS: radio base station
- D: distance
- DB28: shape
- DB30: measurement information
- F: field
- GNSS: multi
- ID: plant
- K: fruit item
- M: measurement region
- NW: public network
- S: trunk
- T: plant
- Ta: target plant

## Claims

1. A management system for a plurality of plants aligned along a row direction, the management system comprising:
a measurement device that is provided in a moving body moving along the row direction and acquires measurement information on fruit items of the plurality of plants;
a positioning device that is provided in the moving body and acquires position information on the moving body;
a shape detection device that is provided in the moving body and detects a shape of a target plant bearing a fruit item among the fruit items measured by the measurement device; and
a management device that identifies the target plant; wherein
the management device includes a processing unit that executes
first identification processing of identifying, based on the position information, the target plant bearing the fruit item measured by the measurement device from among the plurality of plants, and
second identification processing of, when the target plant is unable to be identified by the first identification processing, identifying the target plant based on a detection result of the shape detection device.

2. The management system according to claim 1, wherein the second identification processing includes
processing of acquiring shape information on the target plant based on the detection result, and
processing of identifying the target plant based on a comparison between the shape information on the target plant and shape information, acquired in advance, on the plurality of plants.

3. The management system according to claim 1 or 2, wherein the shape detection device includes at least any one of a LIDAR and a camera.

4. The management system according to claim 1, wherein the first identification processing includes
comparison processing of comparing a predetermined threshold value and a distance between reference positions of the plurality of plants and a position from the position information, and
processing of identifying the target plant based on a result of the comparison processing.

5. The management system according to claim 1, wherein the first identification processing includes
processing of specifying areas that do not overlap each other around respective reference positions of the plurality of plants, and processing of, when the position from the position information is within one area among a plurality of the areas, identifying a plant relevant to the one area as the target plant among the plurality of plants.

6. The management system according to claim 5, wherein
the first identification processing further includes processing of acquiring extending directions of branches extending along the row direction from the reference positions for the plurality of plants, and
the areas are set to regions different according to the extending directions.

7. The management system according to any one of claims 1 to 6, wherein the processing unit further executes
processing of, when the target plant is unable to be identified by the first identification processing, acquiring extending directions of branches extending along the row direction from trunks of the plurality of plants, and
third identification processing of identifying the target plant based on the position information and the extending directions.

8. The management system according to any one of claims 1 to 7, wherein the management device further executes processing of, when identifying the target plant, storing identification information assigned to the target plant and the measurement information in association with each other.

9. The management system according to any one of claims 1 to 8, wherein the fruit items include grapes.

10. The management system according to claim 9, wherein the measurement information includes at least any one of sugar content, acidity, pH, and polyphenol content ratio.

11. A management device for a plurality of plants aligned along a row direction, the management device comprising a processing unit that executes
processing of acquiring measurement information on fruit items of the plurality of plants by a measurement device provided in a moving body that moves along the row direction,
processing of acquiring position information on the moving body by a positioning device provided in the moving body,
processing of acquiring, by a shape detection device provided in the moving body, a detection result of a target plant bearing a fruit item among the fruit items measured by the measurement device,
first identification processing of identifying the target plant based on the position information from among the plurality of plants, and
second identification processing of, when the target plant is unable to be identified by the first identification processing, identifying the target plant based on the detection result.

12. A management method for a plurality of plants aligned along a row direction, the method comprising:
a step of acquiring measurement information on fruit items of the plurality of plants by a measurement device provided in a moving body that moves along the row direction;
a step of acquiring position information on the moving body by a positioning device provided in the moving body;
a step of acquiring, by a shape detection device provided in the moving body, a detection result of a target plant bearing a fruit item among the fruit items measured by the measurement device;
a first identification step of identifying the target plant based on the position information from among the plurality of plants; and
a second identification step of, when the target plant is unable to be identified by the first identification step, identifying the target plant based on the detection result.

13. A computer program for causing a computer to execute management processing for a plurality of plants aligned along a row direction, the computer program for causing the computer to execute
a step of acquiring measurement information on fruit items of the plurality of plants by a measurement device provided in a moving body that moves along the row direction,
a step of acquiring position information on the moving body by a positioning device provided in the moving body,
a step of acquiring, by a shape detection device provided in the moving body, a detection result of a target plant bearing a fruit item among the fruit items measured by the measurement device,
a first identification step of identifying the target plant based on the position information from among the plurality of plants, and
a second identification step of, when the target plant is unable to be identified by the first identification step, identifying the target plant based on the detection result.
